# EUROPÄISCHE PATENTANMELDUNG

(11) **EP 2 444 526 A2**
(43) Veröffentlichungstag der Anmeldung: **25.04.2012**
(21) Anmeldenummer: 11185510.2
(22) Anmeldetag: 17.10.2011
(51) Int. Cl.: C25B 11/03, H01M 4/88

(54) **Sauerstoffverzehrelektrode und Verfahren zu ihrer Herstellung**

(30) Priorität: 21.10.2010 DE 102010042729
(71) Anmelder: Bayer MaterialScience AG, 51368 Leverkusen (DE)
(72) Erfinder: Bulan, Andreas, 40764 Langenfeld (DE); Kintrup, Jürgen, 51373 Leverkusen (DE); Weis, Matthias, 51379 Leverkusen (DE)

(57) **Zusammenfassung**

Es wird ein Sauerstoffverzehrelektrode, insbesondere für den Einsatz in der Chloralkali-Elektrolyse, basierend auf neuartigen Trägern beschrieben. Die neuartigen Träger bestehen aus hochohmigen bzw. elektrisch nichtleitenden Werkstoffen. Die Träger zeichnen sich durch einfache Herstellung, geringes Gewicht, und gute Verarbeitbarkeit bei der Herstellung der Sauerstoffverzehrelektroden aus.

## Beschreibung

Die Erfindung betrifft eine Sauerstoffverzehrelektrode, insbesondere für den Einsatz in der Chloralkali-Elektrolyse, mit einem neuartigen Träger sowie eine Elektrolysevorrichtung. Die Erfindung betrifft ferner die Verwendung dieser Sauerstoffverzehrelektrode in der Chloralkali-Elektrolyse oder Brennstoffzellentechnik.

Die Erfindung geht aus von an sich bekannten Sauerstoffverzehrelektroden, die als Gasdiffusionselektroden ausgebildet sind und üblicherweise einen elektrisch leitenden Träger und eine Gasdiffusionsschicht mit einer katalytisch aktiven Komponente umfassen.

Verschiedene Vorschläge zum Betrieb der Sauerstoffverzehrelektroden in Elektrolysezellen in technischer Größe sind aus dem Stand der Technik grundsätzlich bekannt. Die Grundidee dabei ist, die Wasserstoff entwickelnde Kathode der Elektrolyse (beispielsweise in der Chloralkali-Elektrolyse) durch die Sauerstoffverzehrelektrode (Kathode) zu ersetzen. Eine Übersicht über die möglichen Zelldesigns und Lösungen kann der Veröffentlichung von Moussallem et al ,,Chlor-Alkali Electrolysis with Oxygen Depolarized Cathodes: History, Present Status and Future Prospects", J. Appl. Electrochem. 38 (2008) 1177-1194, entnommen werden.

Die Sauerstoffverzehrelektrode ― im folgenden auch kurz SVE genannt - muss eine Reihe von Anforderungen erfüllen, um in technischen Elektrolyseuren einsetzbar zu sein. So muss der Katalysator und alle anderen verwendeten Materialien chemisch stabil sein gegen Natronlauge von ca. 32 Gew.-% und gegenüber reinem Sauerstoff bei einer Temperatur von typischerweise 80 - 90°C. Ebenso wird ein hohes Maß an mechanischer Stabilität gefordert, dass die Elektroden in Elektrolyseuren einer Größe von üblicherweise mehr als 2 m² Fläche (technische Größe) eingebaut und betrieben werden. Weitere Eigenschaften sind: eine hohe elektrische Leitfähigkeit, eine geringe Schichtdicke, eine hohe innere Oberfläche und eine hohe elektrochemische Aktivität des Elektrokatalysators. Geeignete hydrophobe und hydrophile Poren und eine entsprechende Porenstruktur zur Leitung von Gas und Elektrolyt sind ebenso notwendig, wie eine Dichtigkeit, so dass Gas und Flüssigkeitsraum voneinander getrennt bleiben. Die Langzeitstabilität und geringe Herstellkosten sind weitere besondere Anforderungen an eine technisch nutzbare Sauerstoffverzehrelektrode.

Eine herkömmliche Sauerstoffverzehrelektrode besteht typischerweise aus einem elektrisch leitenden Träger, auf das die Gasdiffusionsschicht mit einer katalytisch aktiven Komponente aufgebracht ist. Als hydrophobe Komponente wird beispielsweise Polytetrafluorethylen (PTFE) eingesetzt, welches zudem als polymerer Binder des Katalysators dient. Bei Elektroden mit Silber-Katalysator dient das Silber als hydrophile Komponente.

Als Katalysator dient in der Regel ein Metall, eine Metallverbindung, eine nichtmetallische Verbindung oder eine Mischung von Metallverbindungen oder nichtmetallischen Verbindungen. Bekannt sind aber auch auf einen Kohlenstoffträger aufgebrachte Metalle, insbesondere Metalle der Platingruppe. Für die Elektrolyse von Alkalichloriden mit Sauerstoffverzehrelektroden haben sich Silberkatalysatoren als besonders geeignet erwiesen.

Bei der Herstellung von SVEs mit Silber-Katalysator kann das Silber zumindest teilweise in Form von Silber (I) oder Silber (II) Oxiden eingebracht werden, welche dann zu metallischem Silber reduziert werden. Die Reduktion erfolgt entweder in der Anfangsphase der Elektrolyse, in welcher bereits Bedingungen für eine Reduktion von Silberverbindungen bestehen, oder in einem gesonderten Schritt vor Inbetriebnahme der Elektrode durch elektrochemische, chemische oder andere, dem Fachmann bekannte Weise. Bei der Reduktion der Silberverbindungen kommt es auch zu einer Änderung in der Anordnung der Kristallite, insbesondere auch zu einer Brückenbildung zwischen einzelnen Silberpartikeln. Dies führt insgesamt zu einer Verfestigung der Struktur.

Bei der Herstellung von Sauerstoffverzehrelektroden lässt sich prinzipiell zwischen trockenen und nassen Fertigungsverfahren unterscheiden.

Bei den trockenen Verfahren wird ein Gemisch aus Katalysator und polymerer Komponente zu feinen Partikeln vermahlen, welche anschließend auf das elektrisch leitende Trägerelement verteilt und bei Raumtemperatur verpresst werden. Ein solches Verfahren ist in EP 1728896 A2 beschrieben. Als bevorzugte Katalysatoren werden in EP 1728896 A2 Silber, Silber I-Oxid, Silber-II-Oxid oder deren Gemische, als Binder Polytertafluoroethylen (PTFE), und als Träger ein Netz aus Nickeldrähten mit einem Drahtdurchmesser von 0,1 ― 0,3 mm und einer Maschenbreite von 0,2 ― 1,2 mm genannt.

Bei den nassen Fertigungsverfahren wird entweder eine Paste oder eine Suspension bestehend aus Katalysator und polymerer Komponente verwendet. Bei der Herstellung der Pasten oder Suspension können oberflächenaktive Substanzen zugegeben werden, um deren Stabilität zu erhöhen. Die Pasten werden wird mittels Siebdruck oder Kalandrieren auf das Trägerelement aufgebracht, während die weniger viskosen Suspensionen üblicherweise auf das Trägerelement aufgesprüht werden. Die Paste bzw. Suspension wird nach Ausspülen des Emulgators schonend getrocknet und dann bei Temperaturen im Bereich des Schmelzpunktes des Polymers gesintert. Ein solches Verfahren wird zum Beispiel in US20060175195 A1 beschrieben.

In älteren Veröffentlichungen finden sich auch Verfahren, bei welchen das Gemisch aus Katalysator und Polymer in einem ersten Schritt zu einem flächigen Gebilde ("Fell") verdichtet wird und dieses Gebilde dann in das Trägerelement gepresst wird. Beispiele für solche Verfahren sind in DE10148599 A1 oder EP0115845B1 beschrieben. Da diese flächigen Gebilde eine geringe mechanische Stabilität aufweisen, haben sich diese Verfahren als wenig praxistauglich erwiesen. Es werden daher diejenigen Verfahren bevorzugt, bei welchen erst die Beschichtung des Trägerelement mit dem Gemisch aus Katalysator und Polymer erfolgt und in weiteren Schritten die Verdichtung und Verfestigung erfolgen.

Bei den Trägerelementen handelt es sich um Gewebe aus leitfähigem Material, zum Bespiel ein Gewebe aus Nickeldrähten, Silberdrähten oder mit Silber überzogenen Nickeldrähten. Es können aber auch andere Strukturen wie Gewirke, Geflechte, Vliese, Strechmetalle, Lochbleche, Schäume oder andere durchlässige Strukturen aus leitfähigen Werkstoffen eingesetzt werden.

Kohlenstoff wird ebenfalls in verschiedenen Formen für Trägerelemente eingesetzt, so zum Beispiel Gewebe oder Papiere aus Kohlenstofffasern. Zur Erhöhung der Leitfähigkeit kann der Kohlenstoff mit Metallkomponenten kombiniert werden, zum Beispiel durch Abscheidung von Metall auf dem Kohlenstoff oder durch Mischgewebe aus Kohlenstofffasern und metallischen Fasern und Filamenten.

In W02008006909 A2 wird die Herstellung einer SVE mit einem mit einem Netz aus Silberdrähten als elektrisch leitendes Trägerelement beschrieben

In EP 1728896 A2 wird die Herstellung einer SVE mit einem Netz aus Nickeldrähten als elektrisch leitendes Trägerelement beschrieben.

In EP 1033419B 1 wird die wird die Herstellung einer SVE mit einem Trägerelement aus mit Silber beschichtetem geschäumtem Nickel beschrieben.

US 4578159A1 nennt metallbeschichtete Fasern für die mögliche Nutzung in Trägerelementen für Sauerstoffverzehrelektroden.

In US20060175195 A1 wird die Herstellung von SVE mit diversen Kohlenstoff-basierenden Trägern beschrieben.

Entsprechend dem Stand der Technik haben die Trägerelemente zwei wesentliche Funktionen: Sie dienen zum einen als mechanischer Träger für die den Katalysator enthaltende Schicht während und nach der Fertigung der Elektroden, und sorgen zum anderen für die Stromverteilung zu den Reaktionszentren.

Nun haben die herkömmlichen Träger diverse Nachteile.

Die Herstellung von Geweben, Vliesen, schwammartiger Strukturen oder anderer Strukturen aus Metallen ist sehr aufwändig.

Metalle habe ein hohes spezifisches Gewicht, und somit haben auch die aus Metallen gefertigten Trägerelemente ein relativ hohes Eigengewicht, welches die Handhabung und den Transport erschwert.

Die Herstellung von Kohlenstofffasern und ihre Verarbeitung zu Flächengebilden wie Geweben ist ebenfalls aufwändig. Kohlenstofffasern haben den weiteren Nachteil, dass sie die Bildung von Wasserstoffperoxid begünstigen, da dieser die Leistung der Elektrode herabsetzt.

Ein weiterer Nachteil ist, dass andere nach dem Stand der Technik bevorzugt eingesetzte Träger vollständig aus Silber bestehen oder zumindest mit Silber beschichtet sind. Durch den hohen Silberpreis erhöhen sich die Kosten für die Herstellung der entsprechenden Sauerstoffverzehrelektroden, welches die Wirtschaftlichkeit ihres Einsatzes beeinträchtigt. Die Aufgabe der vorliegenden Erfindung besteht darin, eine Sauerstoffverzehrelektrode, insbesondere für den Einsatz in der Chloralkali-Elektrolyse, bereitzustellen, die die vorstehenden Nachteile überwindet.

Spezielle Aufgabe der Erfindung ist es ein Sauerstoffverzehrelektrode bereitzustellen, die die Nachteile der bekannten Träger vermeidet und auf Trägern basiert, welche einfach und kostengünstig herzustellen und leicht zu handhaben sind.

Die Aufgabe wird gelöst durch Sauerstoffverzehrelektroden basierend auf Trägern, welche auf einfach und kostengünstig herzustellenden und leicht zu handhabenden, hochohmigen oder elektrisch nicht leitenden Werkstoffen basieren. Überaschenderweise wurde gefunden, dass sich solche hochohmigen oder elektrisch nicht leitende Werkstoffe in hervorragender Weise für Trägerelemente für Sauerstoffverzehrelektroden nutzen lassen, ohne dass die Leistung der Sauerstoffverzehrelektrode beeinträchtigt wird.

Gegenstand der Erfindung ist eine Sauerstoffverzehrelektrode, wenigstens umfassend einen Träger, und eine Beschichtung mit einer Gasdiffusionsschicht und einer katalytisch aktiven Komponente, dadurch gekennzeichnet, dass der Träger auf einem Werkstoff mit einer Leitfähigkeit von < 1000 S/cm, bevorzugt von < 100 S/cm, gemessen bei 20 °C basiert.

Die Werkstoffe für die Träger der erfindungsgemäßen SVE haben Leitfähigkeiten, die deutlich kleiner sind als die von Metallen (Leitfähigkeit Silber: 62 MS/cm (MegaSiemens/cm), Leitfähigkeit Nickel: 14,5 MS/cm) und auch von Kohlenstofffasern (Leitfähigkeit 10^{3 -}10⁴ S/cm). Es handelt sich um klassische Isolatoren (Leitfähigkeit < 10⁻⁸ S/cm), es können aber auch an sich nichtleitende Materialien eingesetzt werden, deren Leitfähigkeit durch Additive angehoben wurde, wie zum Beispiel mit leitfähigem Ruß und insbesondere mit Kohlenstoffnanoröhrchen gefüllte Kunststoffe mit einer Leitfähigkeit von < 1000 S/cm.

Als Werkstoffe für die Träger eignen sich insbesondere Polymere und Mineralfasern.

Besonders geeignete Polymere sind zum Beispiel Polyethylen, Polypropylen, chlorierte Polyolefine, Polyvinylchlorid, Polymere flourierter Olefine wie Polytetrafluorethylen, Polyvinlyfluorid, Polyvinylidenfluorid, Melamin, Polyacrylnitril, Polyamid 6, Polyamid 6,6, Polyamid 11, Polyamid 12, Aromatische Polyamide wie Kevlar^{®}, Polycarbonat, Polystyrol und Copolymere wie ABS, SAN, ASA, Polyphenylenoxid, Polyurethan, Polyethylenterephthalt, Polybutylenterephthalat, Polyetheretherketon, Polysulfon, Polyimid, Polyetherimid, Polyamidimid, Polyarylat, Polyphenylensulfid, Polyvinylacetat, Etyhlen-Vinylacetat, Polyvinylidenchlorid, PMMA, Polybutylene, Celluloseacetat, Polylactide und Copolymere und Blends der genannten Polymere. Bevorzugt werden Polypropylen, Polymere fluorierter Olefine, insbesondere Polytetrafluorethylen, Polyvinylfluorid, Polyphenylensulfid, besonders bevorzugt Polytetrafluorethylen eingesetzt.

Besonders geeignete Mineralfasern sind Glasfasern, bevorzugt solche aus E-Glas, E-CR-Glas, R-Glas, S-Glas, A-Glas, C-Glas, D-Glas, AR-Glas, besonders bevorzugt aus AR-Glas, und Mineralfasern bestehend aus Bor, Bornitrid, Siliziumcarbid, Zirkoniumoxid, Aluminiumoxid, Basalt oder Quarz.

Es können insbesondere aber auch auf Cellulose basierende natürliche Materialien wie Baumwolle oder Sisal eingesetzt werden.

Ebenso können insbesondere auch Kombinationen des vorgenannten Werkstoffe eingesetzt werden.

Auch können in einer besonders bevorzugten Variante der Erfindung elektrisch leitende Komponenten mit einer Leitfähigkeit von > 1.000 S/cm, zum Beispiel Metalldrähte, insbesondere Metalldrähte auf Basis von Nickel, Silber, insbesondere zu einem Anteil von bis zu 10 Gew.-% mit in das Flächengebilde des Trägers eingearbeitet werden.

Als Material für den Träger werden alkali- und/oder sauerstoffbeständige Werkstoffe bevorzugt. Es lassen sich aber auch alkali- und sauerstoff-unbeständige Werkstoffe verwenden. In diesem Fall ist darauf zu achten, dass in der Anfahrphase der Sauerstoffverzehrkathode zu Kontaminationen des Elektrolyten kommt. Bei der Herstellung von Alkali-Hydroxiden müssen Vorkehrungen für die Handhabung der in der Anfangsphase anfallende kontaminierte Lauge getroffen werden, zum Beispiel eine getrennte Lagerung und anschließende Verwendung in Bereichen, bei welchen die Kontamination toleriert wird.

Die Träger können in Form von Geweben, Gewirken, Vliesen, perforierten Folien, Schäumen oder anderen, durchlässigen flächigen Strukturen eingesetzt werden. Bevorzugt werden Gewebe eingesetzt. Es können auch mehrlagige Strukturen, eingesetzt werden, zum Beispiel zwei oder mehrere Lagen von Geweben, Gewirken, Vliesen, perforierte Folien, Schäumen oder anderen, durchlässigen flächigen Gebilden. Die Lagen können unterschiedlich stark sein und unterschiedliche Maschenweiten oder Perforationen haben. Die Träger oder ihre Vorstufen können zwecks besserer Verarbeitbarkeit mit Schlichten oder sonstigen Additiven behandelt werden.

Eine bevorzugte Form der neuen Sauerstoffverzehrelektrode ist dadurch gekennzeichnet, dass die Gasdiffusionsschicht auf einem fluorierten Polymer, insbesondere auf Polytetrafluorethylen und gegebenenfalls zusätzlich katalytisch aktivem Material basiert.

In einer ebenfalls bevorzugten Ausführung ist die katalytisch aktiven Komponente ausgewählt aus der Reihe: Silber, Silber I-Oxid, Silber-II-Oxid oder deren Gemische, insbesondere einem Gemisch aus Silber und Silber I-Oxid.

Wichtig ist, dass die gewählten Materialien und Strukturen den mechanischen Anforderungen bei der Fertigung und Handhabung der SVE gerecht werden.

So lassen sich in dem erwähnten Trockenverfahren Träger aus hochohmigen oder nichtleitende Materialien einsetzen. Bevorzugt werden Träger aus alkalibeständigen Materialien zum Beispiele Gewebe aus Polymer-Monofilen wie Polypropylen. Die Gewebe aus den Polymer-Monofilen sind hinreichend dimensionsstabil und lassen sich mit den beschriebenen Techniken beschichten. Die Verfestigung der katalytisch wirksamen Masse erfolgt ohne Wärmezufuhr, so dass die Struktur und Festigkeit des Trägerelements erhalten bleiben.

Im Vergleich zu den nach dem Stand der Technik als Trägermaterial gebräuchlichen Metallgeweben haben Gewebe aus Polymer-Monofilen ein geringeres Eigengewicht, eine geringere Knickempfindlichkeit und sind generell besser handhabbar.

Dies ist insbesondere im Hinblick auf die Herstellung größerer Stückzahlen von Elektroden nach einem kontinuierlichen oder halbkontinuierlichen Walzverfahren von Vorteil. Gewebe aus Polymer-Monofilen lassen sich als Rollenware leicht abwickeln und in einen Kalander gut einziehen und führen.

In gleicher Weise lassen sich in dem erwähnten Nassherstellungsverfahren Träger aus hochohmigen oder nichtleitenden Materialien einsetzen. Bevorzugt werden alkalibeständige Materialien mit einem Erweichungspunkt des Materials, welcher über der Temperatur im Sinterschritt liegt, wie zum Beispiele Gewebe aus AR-Glas oder aus aromatischen Polyamiden wie Kevlar®.

Die neue Sauerstoffverzehrelektrode wird bevorzugt als Kathode geschaltet, insbesondere in einer Elektrolysezelle für die Elektrolyse von Alkalichloriden, bevorzugt von Natriumchlorid oder Kaliumchlorid, besonders bevorzugt von Natriumchlorid.

Alternativ kann die Sauerstoffverzehrelektrode bevorzugt als Kathode in einer Brennstoffzelle geschaltet werden.

Weiterer Gegenstand der Erfindung ist daher die Verwendung der neuen Sauerstoffverzehrelektrode zur Reduktion von Sauerstoff im Alkalischen, insbesondere in der alkalischen Brennstoffzelle, die Verwendung bei der Trinkwasseraufbereitung, beispielsweise zur Herstellung von Natriumhypochlorit oder die Verwendung in der Chlor-Alkalielektrolyse, insbesondere zur Elektrolyse von LiC1, KCl oder NaC1, bevorzugt von NaC1 oder die Verwendung in einer Metall/Luft-Batterie.

Weitere Gegenstände der Erfindung sind folglich auch eine Elektrolysevorrichtung, insbesondere eine NaC1-Elektrolysezelle und eine alkalische Brennstoffzelle, die die neue Sauerstoffverzehrelektrode aufweisen.

Die neue Sauerstoffverzehrelektrode wird besonders bevorzugt bei der Chlor-Alkali-Elektrolyse und hier insbesondere bei der Natriumchlorid-(NaC1)-Elektrolyse eingesetzt.

### Beispiel

3,5 kg einer Pulvermischung, bestehend aus 7 Gew.-% PTFE-Pulver, 88 Gew.-% Silber 1-Oxid und 5 Gew.-% Silberpulver des Typs 331 der Fa. Ferro, wurden in einem Mischer der Fa. Eirich, Typ R02, ausgerüstet mit einem Sternwirbler als Mischelement, bei einer Drehzahl von 6000 U/min so gemischt, dass die Temperatur der Pulvermischung 55°C nicht übersteigt. Dies wurde dadurch erreicht, dass der Mischvorgang unterbrochen und die Mischung in einem Kühlraum abgekühlt wurde. Insgesamt wurde das Mischen dreimal durchgeführt. Nach dem Mischen wurde die Pulvermischung durch ein Feinsieb mit einer Maschenweite von 1,0 mm gesiebt.

Die gesiebte Pulvermischung wurde anschließend auf ein Netz aus Polypropylen-Monofilen mit einer Drahtdicke von 0,25 mm und einer Maschenweite von 0,5 mm aufgebracht. Das Aufbringen erfolgte mit Hilfe einer 2 mm dicken Schablone, wobei das Pulver mit einem Sieb mit einer Maschenweite von 0,1 mm aufgebracht wurde. Überschüssiges Pulver, das über die Dicke der Schablone hinausragte, wurde mittels Abstreifer entfernt. Nach Entfernung der Schablone wurde der Träger mit der aufgebrachten Pulvermischung mittels einer Walzenpresse mit einer Presskraft von 0,5 kN/cm verpresst. Der Walzenpresse wurde die fertige Gasdiffusionselektrode entnommen.

Die so hergestellte Gasdiffusionselektrode wurde als Sauerstoffverzehrkathode bei der Elektrolyse einer Natriumchlorid-Lösung mit einer Ionenaustauschermembran von DuPONT N982WX und einem Natronlaugespalt zwischen SVE und Membran von 3 mm eingesetzt. Die Zellspannung bei einer Stromdichte von 4 kA/m², einer Elektrolyttemperatur von 90° C, und einer Natronlauge-Konzentration von 32 Gew.-% betrug 2,2 V.

Die gemessene Zellspannung ist der einer auf einem Nickelnetz als Träger basierenden Elektrode vergleichbar. Vorteile der neuen Elektrode sind ihr leichteres Gewicht (ca. 1 kg weniger als eine vergleichbare Ni basierte Elektrode mit 2 m² Fläche) und ihre leichtere Verarbeitbarkeit beim Einbau aufgrund des niedrigeren Gewichtes und ihrer größeren mechanischen Flexibilität.

## Patentansprüche

1. Sauerstoffverzehrelektrode, mindestens aufweisend einen Träger in Form eines Flächengebildes und einer Beschichtung mit einer Gasdiffusionsschicht und einer katalytisch aktiven Komponente, **dadurch gekennzeichnet, dass** der Träger auf einem Werkstoff mit einer Leitfähigkeit von < 1000 S/cm, bevorzugt von < 100 S/cm, gemessen bei 20 °C basiert.

2. Sauerstoffverzehrelektrode nach Anspruch 1, **dadurch gekennzeichnet, dass** der Träger auf einem Polymer basiert.

3. Sauerstoffverzehrelektrode, nach Anspruch 2 **dadurch gekennzeichnet, dass** das Polymer ausgewählt ist aus der Reihe: Polypropylen, Polymere fluorierter Olefine insbesondere Polytetrafluorethylen, Polyvinylfluorid, Polyphenylensulfid, und besonders bevorzugt Polypropylen ist.

4. Sauerstoffverzehrelektrode nach Anspruch 1, **dadurch gekennzeichnet, dass** der Träger auf Mineralfasern, insbesondere auf Glasfasern basiert.

5. Sauerstoffverzehrelektrode nach Anspruch 4, **dadurch gekennzeichnet, dass** der Träger auf Glasfasern basiert mit einem Glas, das ausgewählt ist aus der Reihe: E-Glas, E-CR-Glas, R-Glas, S-Glas, A-Glas, C-Glas, D-Glas, AR-Glas, und bevorzugt AR-Glas ist.

6. Sauerstoffverzehrelektrode nach einem der Ansprüche 1 bis 5, **dadurch gekennzeichnet, dass** der Werkstoff des Trägers alkalibeständig und/oder oxidationsbeständig ist.

7. Sauerstoffverzehrelektrode nach einem der Ansprüche 1 bis 6, **dadurch gekennzeichnet, dass** in das Flächengebilde des Trägers zusätzlich elektrisch leitende Komponenten mit einer Leitfähigkeit von > 1.000 S/cm bevorzugt Metalldrähte, insbesondere bevorzugt Metalldrähte auf Basis von Nickel, Titan, Silber, eingearbeitet sind.

8. Sauerstoffverzehrelektrode nach Anspruch 7, **dadurch gekennzeichnet, dass** die zusätzlichen elektrisch leitende Komponenten, insbesondere die Metalldrähte, zu einem Anteil von bis zu 10 Gew.-% mit in das Flächengebilde des Trägers eingearbeitet sind.

9. Sauerstoffverzehrelektrode nach einem der Ansprüche 1 bis 8, **dadurch gekennzeichnet, dass** das Flächengebilde des Trägers in Form eines Gewebes, Gewirks, Vlieses, perforierter Folie, Schaum vorliegt, bevorzugt als Gewebe, und insbesondere in mehreren Lagen aufgebaut ist.

10. Sauerstoffverzehrelektrode nach einem der Ansprüche 1 bis 9, **dadurch gekennzeichnet, dass** die Gasdiffusionsschicht auf einem fluorierten Polymer, insbesondere auf Polytetrafluorethylen und gegebenenfalls zusätzlich katalytisch aktivem Material basiert.

11. Sauerstoffverzehrelektrode nach einem der Ansprüche 1 bis 11, **dadurch gekennzeichnet, dass** die katalytisch aktiven Komponente ausgewählt ist aus der Reihe: Silber, Silber I-Oxid, Silber-II-Oxid oder deren Gemische, insbesondere einem Gemisch aus Silber und Silber I-Oxid.

12. Verwendung der Sauerstoffverzehrelektrode nach einem der Ansprüche 1 bis 11 als Sauerstoff verzehrende Kathode in der Elektrolyse, insbesondere in der Chloralkalielektrolyse, oder als Elektrode in einer alkalischen Brennstoffzelle oder als Elektrode in einer Metall/Luft-Batterie.

13. Elektrolysevorrichtung, insbesondere für die Chloralkalielektrolyse, aufweisend eine Sauerstoffverzehrelektrode nach einem der Ansprüche 1 bis 11 als Sauerstoff verzehrende Kathode.
